# EUROPEAN PATENT SPECIFICATION

(11) **EP 3 396 224 B1**
(45) Date of publication and mention of the grant of the patent: **15.07.2020**
(21) Application number: 16878802.4
(22) Date of filing: 21.12.2016
(51) Int. Cl.: F16L 37/096, F16L 37/127

(54) **LOCK MECHANISM FOR TUBULAR BODY**
VERRIEGELUNGSMECHANISMUS FÜR ROHRFÖRMIGEN KÖRPER
MÉCANISME DE VERROUILLAGE POUR CORPS TUBULAIRE

(30) Priority: 24.12.2015 JP 2015250797
(43) Date of publication of application: 31.10.2018
(73) Proprietor: Nifco Inc., Kanagawa 239-8560 (JP)
(72) Inventor: NEZU, Mikio, Yokosuka-shi Kanagawa 239-8560 (JP)
(74) Representative: Dr. Gassner & Partner mbB
(86) International application number: PCT/JP2016/088197
(87) International publication number: WO 2017/110915

(56) References cited:
- DE-U- 1 808 164
- GB-A- 1 569 451
- JP-A- H0 930 423
- JP-A- S62 124 385
- JP-A- 2012 045 531
- JP-B2- H0 481 670
- JP-Y1- S 343 200
- JP-Y2- H0 110 647
- JP-Y2- H0 712 228
- US-A- 3 442 535
- US-A1- 2014 210 203

## Description

### Field of Technology

The present invention relates to a lock mechanism for a tubular member, with the features of the preamble of claim 1.

### Background Art

A conventional lock mechanism for a tubular member is disclosed in US 3,442,535 A. Similar lock mechanisms are known from US 2014/210203 A1 and DE 18 08 164 U.

Figs. 10(a) and 10(b) show a lock mechanism disclosed in Patent Document 1. This lock mechanism is formed such that a tubular member (an adapter) 1 is attached to or detached from a housing (a coupler) 2 by operating a lock member (a fastening cam lever) 5 provided in a housing 2 to engage with or disengage from the tubular member 1. Here, the tubular member 1 includes a circumferential groove-shaped engagement portion 8 provided on an outer periphery to lock or release a cam portion 6 of the lock member 5. The housing 2 includes a pair of projecting portions 3 provided on an outer periphery of a receiving cylinder portion receiving a tip portion of the tubular member 1 and disposing the lock member 5 therebetween; and an opening 7 protruding and entering the cam portion 6. The lock member 5 is pivotally supported turnably by a support shaft 4 relative to the housing 2 in a state wherein a cam portion side is disposed between both projecting portions 3. Also, there are included first and second engagement concave portions 13 and 14 provided in the lock member 5; and a lock pin 17 provided in the housing 2, and urged in a direction of engaging the engagement concave portions 13 and 14 to be engageable with and disengageable from the respective engagement concave portions 13 and 14.

In the aforementioned lock mechanism, when the lock member 5 turns to a tubular member 1 side, the cam portion 6 enters with respect to an outside from the opening 7 so as to come to an unlocked state, and when the lock member 5 turns to an opposite side, the cam portion 6 engages the engagement portion 8 from the opening 7 so as to come to a locked state. Namely, the lock pin 17 engages the first engagement concave portion 13 in the unlocked state of the lock member 5, and the lock pin 17 engages the second engagement concave portion 14 in the locked state of the lock member 5, so that the lock member 5 is made so as not to unexpectedly turn to the unlocked state from the locked state.

### Prior Art Document

### Patent Document

Patent Document 1: Japanese Patent No. JP 4773154 B2.

### Summary of the Invention

### Problems to be Solved by the Invention

As for an application example, the aforementioned lock mechanism is used when connecting and separating both piping or both pipes by attaching to and detaching from the tubular member and the housing, or when opening and closing one end of the tubular member by attaching to and detaching from the housing relative to the tubular member as well. Also, there is a case of frequently attaching to and detaching from both pipes or both hoses, which are watering materials, or frequently attaching to and detaching from the housing relative to the tubular member as well. Therefore, as for the lock mechanism, it is preferable that an engagement operation and a disengagement operation can be carried out by one-touch operation, and that even if an outer diameter of the piping becomes large and heavy, attaching and detaching operations can be easily carried out.

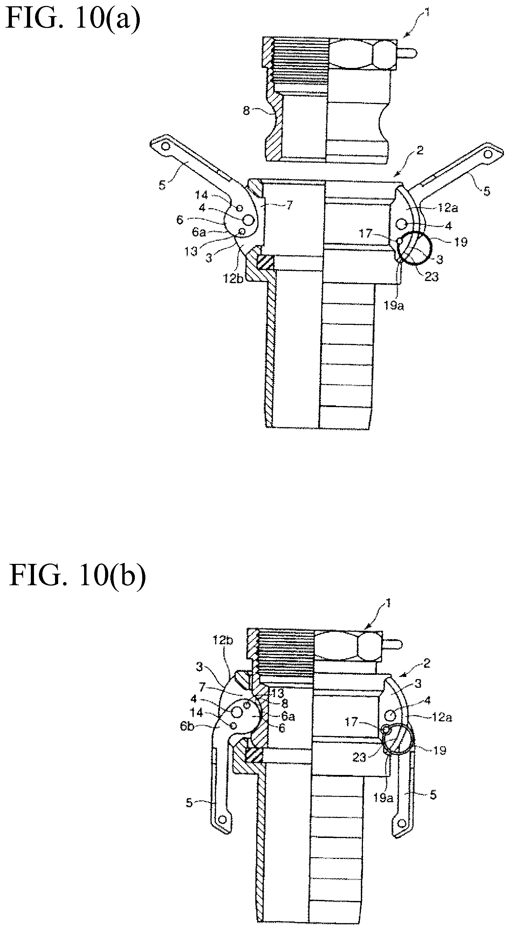

However, in the lock mechanism, for example, in a case wherein the tubular member 1 is removed from the housing 2, first, in the locked state of the lock member 5 in Fig. 10(b), the lock pin 17 is moved back against an urging force using a ring-shaped finger pressing portion 19, and while maintaining the aforementioned state, the lock member 5 has to be switched to the unlocked state by a turning operation as shown in Fig. 10(a) so as to lack in operability. In this regard, especially, if the outer diameter of the piping or pipe becomes large or heavy, it takes time for the attaching and detaching operations so as to have trouble. Also, it is more difficult particularly in a case wherein an operation is carried out in an outdoor circumstance having a poor footing area, a narrow working space, or the like.

An object of the present invention is to provide a lock mechanism for a tubular member which solves the aforementioned problems more or less, and can carry out an engagement operation and a disengagement operation of the lock member by one-touch operation while maintaining simplicity. Other objects of the present invention will be clarified in the following explanation of contents.

### Means for Solving the Problems

In order to obtain the aforementioned object, a lock mechanism with the features of claim 1 is provided. The lock mechanism for a tubular member according to the present invention attaches and detaches the tubular member relative to a housing by engaging and disengaging a lock member provided in the housing relative to an engagement portion of the tubular member, wherein the lock member is axially supported turnably on the housing, and includes an urging device provided between the lock member and the housing, and the urging device switches an urging direction in accordance with a turning angle of the lock member to urge the lock member in a locking direction of engaging with the tubular member and a releasing direction of disengaging from the tubular member.

The aforementioned present invention may be embodied as described in the following aspects.
(A) The inventive lock mechanism comprises a structure wherein the urging device is a torsion spring, engages one end side of the torsion spring with the housing side, and engages the other end side with the lock member side. According to this aspect, the urging device is the torsion spring so as to be simple, and in an engagement operation and a disengagement operation of the lock member, a moderate feeling can be obtained so as to provide excellent operability.
(B) A structure wherein in the torsion spring, one end thereof engages a groove portion formed in an approximately U shape and provided in the housing, and the other end thereof engages a hole portion formed in the lock member. According to this aspect, an assembly property is excellent, and a possibility of unexpectedly separating can be eliminated.
(C) A structure wherein the lock member includes a first abutment portion abutting against the housing in a state of being engaged with the tubular member; and a second abutment portion abutting against the housing in a state of being disengaged from the tubular member. According to this aspect, for example, a turning range of the lock member can be set in an arbitrary angle by changing a shape and the like of the respective abutment portions, thereby increasing the degree of freedom of design.
(D) A structure wherein the lock member includes a prevention portion projecting into the housing to prevent an insertion of the tubular member in a state wherein the lock member is urged in the releasing direction of disengaging. According to this aspect, in a disengagement state, the tubular member abuts against the prevention portion so as not to enter into the housing. In short, when the tubular member enters into the housing, the lock member is switched to an engagement state. An advantage of the aspect is such that if the tubular member can enter into the housing in the disengagement state of the lock member, a problem that an operator forgets an operation of switching the lock member to the engagement state can be prevented beforehand.
(E) A structure wherein the lock mechanism for the tubular member comprises a receiving cylinder portion provided in the housing and receiving a corresponding tube portion of the tubular member inside; and a flange portion provided in the tubular member to face an end face of the receiving cylinder portion in a state wherein the corresponding tube portion is inserted into the receiving cylinder portion, with an enlarged diameter, and there is included a projecting portion provided in at least one of the end face of the receiving cylinder portion and the flange portion, and coming close to the other of the end face of the receiving cylinder portion and the flange portion in a state wherein the corresponding tube portion of the tubular member is inserted into the receiving cylinder portion. According to this aspect, when the tubular member and the housing are operated to come close to each other, or one of the tubular member and the housing is operated to come close to the other of the tubular member and the housing, the projecting portion operates in such a way so as to scrape an attached object such as mud and the like attached to a face facing the receiving cylinder portion and the flange portion.

### Effect of the Invention

In the lock mechanism according to the present invention, in a case wherein the tubular member is contacted with or separated from the housing, or the housing and the tubular member are contacted with or separated from each other so as to be attached or detached, when the lock member is switched from the state wherein the lock member is disengaged from the tubular member to the engagement state, the engagement state is maintained by an urging force of the urging device, and when the lock member is switched to the disengagement state again, the disengagement state is maintained by the urging force of the urging device. Thereby, in attaching and detaching operations, after the lock member is switched to the engagement state or the disengagement state by one-touch operation, the tubular member can be mounted on the housing or can be operated to be separated from the housing using both hands so as to improve usability.

### Brief Description of the Drawings

Figs. 1(a) to 1(c) show an application example of a lock mechanism for a tubular member according to an embodiment, wherein Fig. 1(a) is a top view in a use condition of a housing and a tubular member; Fig. 1(b) is a front view thereof; and Fig. 1(c) is a right end view.
Fig. 2 is an enlarged cross-sectional view taken along a line A-A in Fig. 1(a), and a partially enlarged view thereof.
Fig. 3 is a cross-sectional view showing a lock member in a disengaged condition from an engagement state in Fig. 2, and a partially enlarged view thereof.
Fig. 4(a) is a cross-sectional view for explaining an operation when the tubular member is connected to the housing; and Fig. 4(b) is a cross-sectional view for explaining a state just before the tubular member is connected to the housing.
Fig. 5(a) is a partially broken structural view showing essential parts of the invention in a disengagement state of the lock member; and Fig. 5(b) is a partially broken structural view showing the essential parts of the invention in the engagement state of the lock member.
Fig. 6 is a cross-sectional view on a housing side showing the first modified example of the aforementioned embodiment in the disengagement state of the lock member, and a partially enlarged view thereof.
Fig. 7 is a cross-sectional view on the housing side showing the aforementioned first modified example in the engagement state of the lock member, and a partially enlarged view thereof.
Figs. 8(a) to 8(c) are cross-sectional views showing a second modified example of the aforementioned embodiment, and show a state before the tubular member is inserted into the housing, a state wherein the tubular member is in a middle being inserted into the housing, and a state when the tubular member is completely inserted into the housing.
Figs. 9(a) and 9(b) show the housing of the second modified example, wherein Fig. 9(a) is a perspective view in a state wherein the housing is disposed in an up-and-down direction; and Fig. 9(b) is a top view thereof.
Figs. 10(a) and 10(b) show a lock mechanism of Patent Document 1, wherein Fig. 10(a) is a cross-sectional view in a non-locked state; and Fig. 10(b) is a cross-sectional view in a locked state.

### Best Modes of Carrying out the Invention

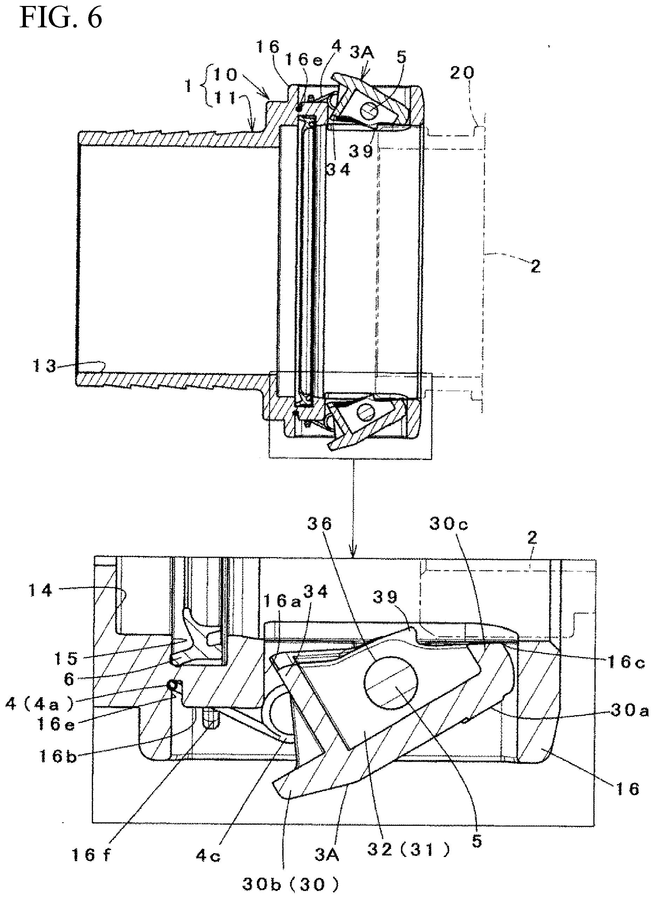

Hereinafter, embodiments of the present invention will be explained with reference to the attached drawings. In the explanation, after describing a lock mechanism of the embodiment and operation characteristics thereof, changes in modified examples in Fig. 6 to Fig. 9(b) will be described.

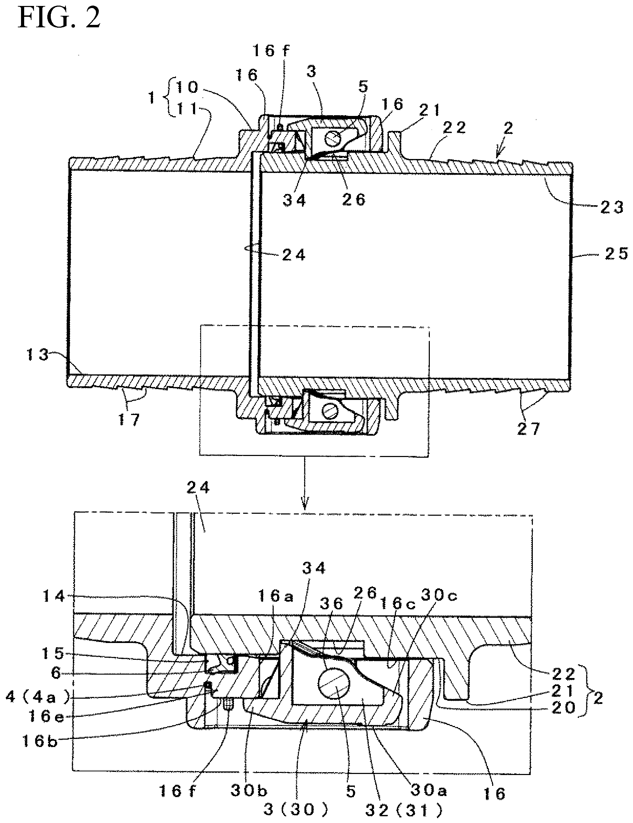

(Structure) As shown in Fig. 2, the lock mechanism of the embodiment is a type wherein a tubular member 2 is attached and detached relative to a housing 1 by engaging and disengaging levers 3 which are a lock member provided in the housing relative to a circumferential groove 26 of the tubular member 2. As for applications, especially, it is preferable for a condition of connecting and separating both pipes, both piping, both hoses, or the like by attaching and detaching the tubular member and the housing; attaching and detaching both pipes, both piping, or both hoses which are watering materials; or frequently attaching and detaching the housing relative to the tubular member.

The lock mechanism includes a receiving cylinder portion 10 provided in the housing 1 and receiving a corresponding tube portion 20 of the tubular member 2 into a cylinder; the levers 3 provided turnably on an outer face side of the receiving cylinder portion 10, and engaging with and disengaging from the circumferential groove 26 of the tubular member 2; and torsion springs 4 which are an urging device provided between the lever 3 and the housing 1. Incidentally, although materials of the housing 1, the tubular member 2, and the lever 3 are all resin molded articles, they may be made of materials other than resin.

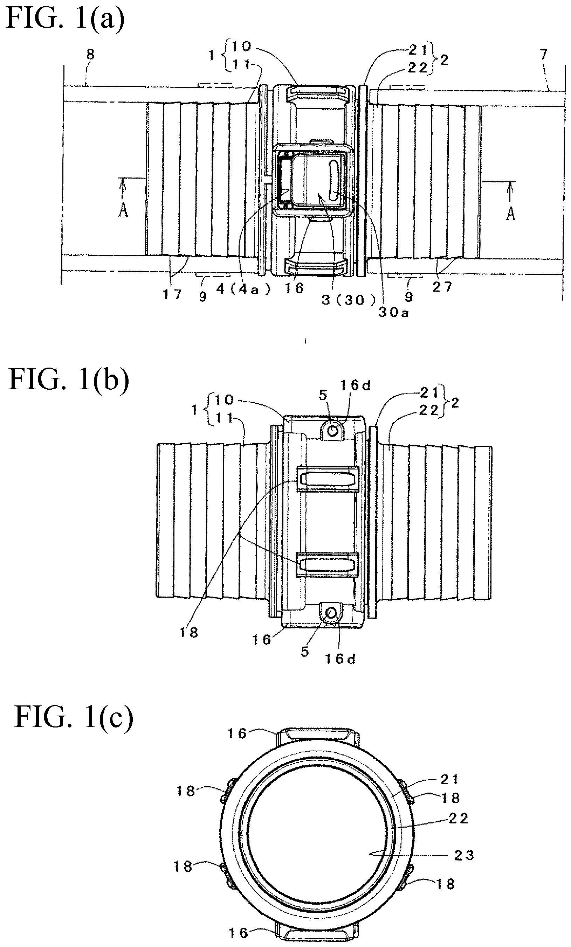

Here, as shown in Figs. 1(a) to 1(c), Figs. 4(a) and 4(b), and Figs. 5(a) and 5(b), the housing 1 is formed by the receiving cylinder portion 10 provided on one end side and connected to the tubular member 2; and a connection portion 11 provided on the other end side and connected to a tube member 8 such as the pipe, the hose, or the like. As for an inside of a cylinder, an inner diameter 14 of the receiving cylinder portion 10 is larger compared to an inner diameter 13 of the connection portion 11. In contrast, the tubular member 2 is formed by the insertion corresponding tube portion 20 provided on one end side, inserted into the receiving cylinder portion 10, and forming the circumferential groove 26 which is an engagement portion on a tube outer periphery; a connection portion 22 provided on the other end side, and connected to a tube member 7 such as the pipe, the hose, or the like; and a brim-like flange portion 21 provided between the corresponding tube portion 20 and the connection portion 22, and increasing a diameter, and an inner diameter of the tubular member 2 is uniform from a front end 24 to a back end 25.

Incidentally, in the connection portions 11 and 22, there is provided a plurality of circumferential claws 17 and 27 which makes difficult to come out when inserted into the tube members 8 and 7. A corresponding end portion of the tube member 7 is mounted in a state of being fastened by a fastening band 9 as needed after an outer periphery of the connection portion 22 is pushed into an inner diameter side (see Fig. 1(a)). A corresponding end portion of the tube member 8 is also mounted in a state of being fastened by the fastening band 9 as needed after an outer periphery of the connection portion 21 is pushed into an inner diameter side (see Fig. 1(a)).

Also, the receiving cylinder portion 10 has a diameter with one size larger than that of the connection portion 11, and includes an inner peripheral groove 15 provided on an inner periphery; approximately rectangular frame portions 16 located on an outer periphery and provided at two portions dividing equally the circumference of the receiving cylinder portion 10; and a plurality of reinforcing and placing ribs 18 and 18 provided between the frame portions 16 in the outer periphery. In the inner peripheral groove 15, there is mounted a ring-shaped seal member 6. The seal member 6 keeps watertightness between the inner diameter of the receiving cylinder portion 10 and the corresponding tube portion 20.

On the other hand, the frame portions 16 include openings 16a notching one portion on a bottom face and communicating with the inside of the cylinder; turn-controlling receiving faces 16b located in an axial direction, provided at a back side, and formed to be one step higher; turn-controlling receiving faces 16c located in the axial direction, provided at a corner portion on a side opposite to the turn-controlling receiving faces 16b; shaft holes 16d (see Fig. 1(b)) provided in a direction intersecting with the axial direction, i.e., on a coaxial line on right and left side faces; groove portions 16e provided on a front-face inner side in the axial direction; and control portions 16f provided on right and left inner side faces. Each groove portion 16e is a spring-engaging vertical groove in the direction intersecting with the axial direction. Each control portion 16f is a vertical rib facing a portion corresponding to the torsion spring 4.

In the aforementioned frame portions 16, there are movably supported the levers 3 through support shafts 5, and there are assembled the torsion springs 4 in such a way so as to urge the levers 3 in a locking direction of engaging with the tubular member 2 and in a releasing direction of disengaging from the tubular member 2.

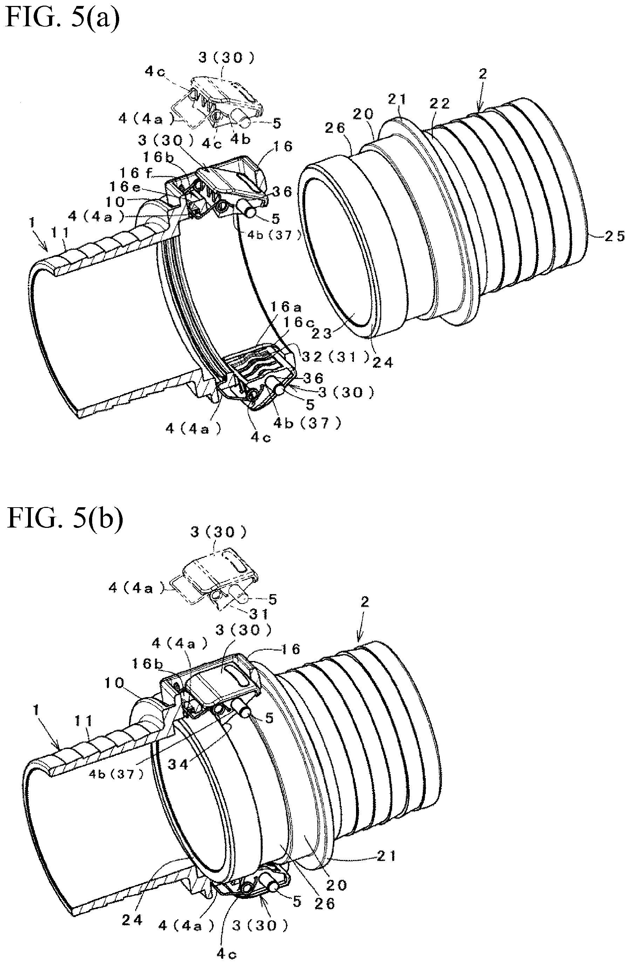

Namely, each lever 3 is formed by an upper plate portion 30 and a block portion 31 projecting on a lower face of the upper plate portion 30, and has a size which can be movably housed inside the frame portion 16 as a whole. In the upper plate portion 30, there are provided a nonslip projection portion 30a projecting on au upper-face back side; a first abutment portion 30b positioned on an upper-face front side and abutting against the receiving face 16b; and a second abutment portion 30c provided on the upper-face back side to be able to abut against the receiving face 16c. In the block portion 31, as shown in Fig. 5(a), there are provided a plurality of grooves 32 notched in an inverted concaved shape on a lower face; an engagement portion 34 engaging with and disengaging from the circumferential groove 26; a shaft hole 36 passing through to right and left; and a spring locking hole 37 provided near the shaft hole 36.

As shown in Figs. 5(a) and 5(b), each torsion spring 4 has an approximately U shape having a size that can sandwich both sides of the lever 3 inside, and is formed by one end portion 4a which is an intermediate portion of the approximately U shape; other end portions 4b which are both ends of the approximately U shape; and a coil-shaped winding portion 4c provided in a line portion between both ends of one end portion 4a and the respective other end portions 4b. Then, the torsion spring 4 is assembled relative to the lever 3 in a state wherein the block portion 31 is disposed inside the approximately U shape by engaging the other end portions 4b on both sides with the corresponding locking hole 37.

Next, the lever 3 is assembled to the frame portion 16 together with the torsion spring 4. In this operation, for example, in a state wherein the lever 3 is positioned and disposed inside the frame portion 16, the support shaft 5 is inserted to pass through one shaft hole 16d of the frame portion, the shaft hole 36, and the other shaft hole 16d of the frame portion, and is retained so as to be incorporated to be movable from front to back at a supporting point of the support shaft 5 relative to the frame portion 16. After that, in the torsion spring 4, one end portion 4a engages the groove portion 16e inside the frame portion, and the line portion between both ends of one end portion 4a and the winding portion 4c is disposed in such a way so as to face the control portion 16f. Incidentally, the control portion 16 is for controlling so that the line portion between both ends of one end portion 4a and the winding portion 4c in the torsion spring 4 does not move in a right-and-left direction, or for absorbing looseness; however, the control portion 16 can be omitted functionally.

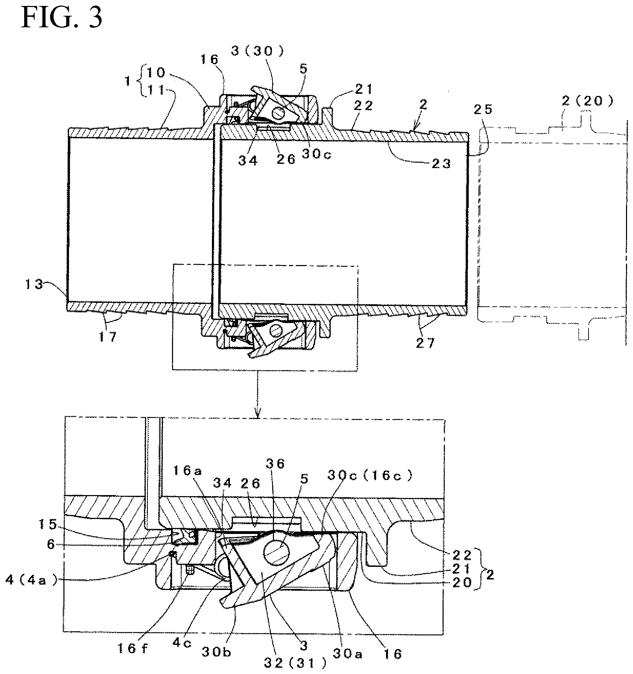

Thereby, the lever 3 is urged to turn until the first abutment portion 30b abuts against the receiving face 16b as shown in an enlarged view in Fig. 2 by an urging force in an engagement direction of the torsion spring 4 so as to come to an engagement state which becomes approximately horizontal. Also, from the engagement state thereof, when the nonslip projection portion 30a or a vicinity of the projection portion 30a is pushed downward against the urging force of the torsion spring 4 to turn the lever 3, the torsion spring 4 reverses an urging direction from a middle of the turning of the lever 3. The lever 3 is urged to turn in a disengagement direction by the inversion of the torsion spring 4, and as shown in an enlarged view in Fig. 3, the lever 3 is switched to a disengagement state wherein the second abutment portion 30c abuts against the receiving face 16c.

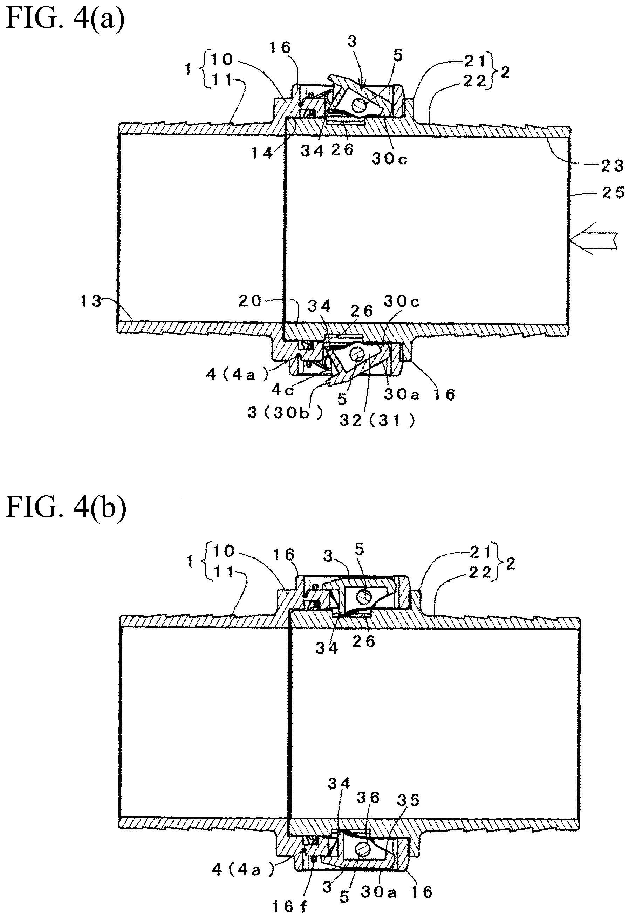

(Operations) The aforementioned lock mechanism especially excels in the following respect as for the operation characteristics.
(A) In the lock mechanism, in a case wherein the tubular member 2 is connected relative to the housing 1, or the housing 1 and the tubular member 2 are brought close to each other to be connected, as shown in Fig. 4(b), after the lever 3 comes to the engagement state, when the corresponding tube portion 20 is operated to be inserted into the receiving cylinder portion 10, the front end 24 of the corresponding tube portion 20 abuts against the engagement portion 34 in a middle of an insertion, however, the corresponding tube portion 20 is further pushed in. Then, in the corresponding tube portion 20, since the lever 3 turns in the disengagement direction against the urging force of the torsion spring 4, the front end 24 further moves to a back of the receiving cylinder portion 10 without being obstructed by the engagement portion 34. When the circumferential groove 26 faces the engagement portion 34, the lever 3 turns in the engagement direction by the urging force of the torsion spring 4, and as shown in Fig. 4(b), the lever 3 is switched to the engagement state wherein the engagement portion 34 projects into the circumferential groove 26. In this engagement state, as shown in the enlarged view in Fig. 2, in a state wherein the first abutment portion 30b abuts against the receiving face 16b to control the turning, the lever 3 comes to an approximately horizontal state inside the frame portion 16.
   Incidentally, in an operation of connecting the tubular member 2 relative to the housing 1, other than the aforementioned operations, for example, as shown in Fig. 4(a), the lever 3 comes to the disengagement state, and then, after the corresponding tube portion 20 is operated to be inserted into the receiving cylinder portion 10, the lever 3 can be finally switched to the engagement state as shown in Fig. 4(b) as well.
   Then, in the aforementioned lock mechanism, since the lever 3 is urged in two directions of the engagement direction and the disengagement direction by the torsion spring 4, for example, in the disengagement state of the lever 3, the tube portion 20 can be inserted into the receiving cylinder portion 10 using both hands, and after the tube portion 20 is inserted, the tube portion 20 and the receiving cylinder portion 10 can be reliably connected by a push-in operation of the lever 3, i.e., by one-touch operation so as to excel in connection operability. Additionally, the lever 3 is disposed outside to be visible so as to excel in a fastening confirmability as well. Obviously, the lock mechanism becomes compact in an appearance compared to Patent Document 1, and since the lock mechanism is made of resin, it becomes light in weight so as to become easy to carry.
(B) In the aforementioned lock mechanism, in a connected state, since the engagement portion 34 engages the circumferential groove 26, the housing 1 and the tubular member 2 can relatively turn together, and are difficult to receive stress in a torsion direction receiving from the tube members 7 and 8 connected to the connection portions 11 and 22. Also, torsion of the tube members 7 and 8 is corrected so as to become excellent in attachment and detachment operability.
(C) Also, as shown in Figs. 4(a) and 4(b), the housing 1 and the tubular member 2 are in a state wherein an end face of the tube portion 20 abuts against a step end face between the inner diameter 14 of the receiving cylinder portion 10 and the inner diameter 13 of the connection portion 11; however, when a liquid flows to the tube members 7 and 8, as shown in Fig. 2, by a liquid pressure thereof, both members move slightly, i.e., in a direction of separating until the engagement portion 34 abuts against a corresponding end face of the circumferential groove 26. At a time when a pressure is applied by the liquid pressure, i.e., at a time of a withstand pressure, as shown in Figs. 1(a) to 1(c) and Fig. 2, the engagement portion 34 presses to contact the corresponding end face of the circumferential groove 26, and comes to a state (an incapable disengagement state) wherein the lever 3 cannot be pushed so as to excel in safety. Also, in the incapable disengagement state, the housing 1 and the tubular member 2 do not rotate relative to the other member so as not to cause the torsion of the tube members 8 and 7 as well.
(D) In a case wherein the housing 1 and the tubular member 2 are separated again, when each lever 3 pushes the nonslip projection portion 30a or the vicinity of the projection portion 30a downward against the urging force of the torsion spring 4 from the engagement state, the torsion spring 4 reverses the urging direction from the middle of the turning so as to urge to turn the lever 3 in the disengagement direction. As a result, as shown in the enlarged view in Fig. 3, the lever 3 turns until the second abutment portion 30c abuts against the receiving face 16c so as to come to an inclination state, and the engagement portion 34 is disengaged from the circumferential groove 26. Thereat, an operator pulls out the corresponding tube portion 20 of the tubular member relative to the receiving cylinder portion 10 of the housing, or pulling the housing 1 and the tubular member 2 in a direction of separating from each other. This operation can be carried out using both hands so as to excel in operability.

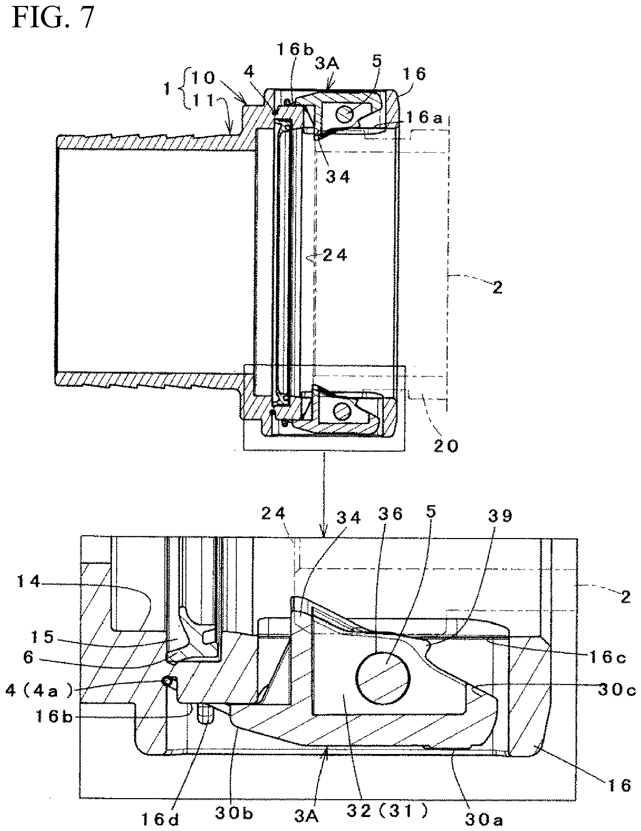

(First Modified Example) Compared to the aforementioned embodiment, the first modified example in Fig. 6 and Fig. 7 is an example which can prevent a problem that since the tubular member 2 can be inserted into the receiving cylinder portion 10 of the housing in the disengagement state of the lever 3, an operator forgets an operation of switching the lever 3 to the engagement state, and starts to use it without carrying out the operation. In the explanation, in order to avoid overlapped descriptions, only differences with respect to the aforementioned embodiment will be described.

In the modified example, in contrast with the aforementioned lever 3, in the disengagement state wherein each lever 3A is urged in a direction of disengaging by the torsion spring 4, the lever 3A includes a prevention portion 39 projecting to an inside of the receiving cylinder portion 10 of the housing, and preventing the corresponding tube portion 20 of the tubular member 2 from entering. The prevention portion 39 is provided to project on a lower face side of the block portion 31, and the lever 3A projects to the inside of the receiving cylinder portion 10 in the disengagement state in Fig. 6, and in the engagement state in Fig. 7, the lever 3A has a size that retracts from the inside of the receiving cylinder portion 10.

Therefore, in the first modified example, in the disengagement state of the lever 3A, the tubular member 2 abuts against the prevention portion 39 so as not to enter into the receiving cylinder portion 10. Consequently, in a case wherein the tubular member 2 is operated to be connected to the housing 1, the lever 3A is switched to the engagement state in Fig. 7, and the prevention portion 39 retracts from the inside of the receiving cylinder portion 10. In that state, when the corresponding tube portion 20 of the tubular member is inserted into the receiving cylinder portion 10, in a middle of the insertion, as shown in Fig. 7, the front end 24 of the corresponding tube portion 20 abuts against the engagement portion 34. When the corresponding tube portion 20 is further pushed into the receiving cylinder portion 10, in the lever 3A, the engagement portion 34 engages the circumferential groove 26 against the urging force of the torsion spring 4 by stress receiving from the corresponding tube portion 20 while the lever 3A turns in a direction of reducing a projecting amount from the opening 16a.

In the aforementioned first modified example, in the disengagement state of the lever 3A, when the tubular member 2 is inserted into the receiving cylinder portion 10 of the housing, the problem that an operator forgets the operation of switching the lever 3A to the engagement state before flowing the liquid such as water and the like, can be reliably eliminated with a simple structure.

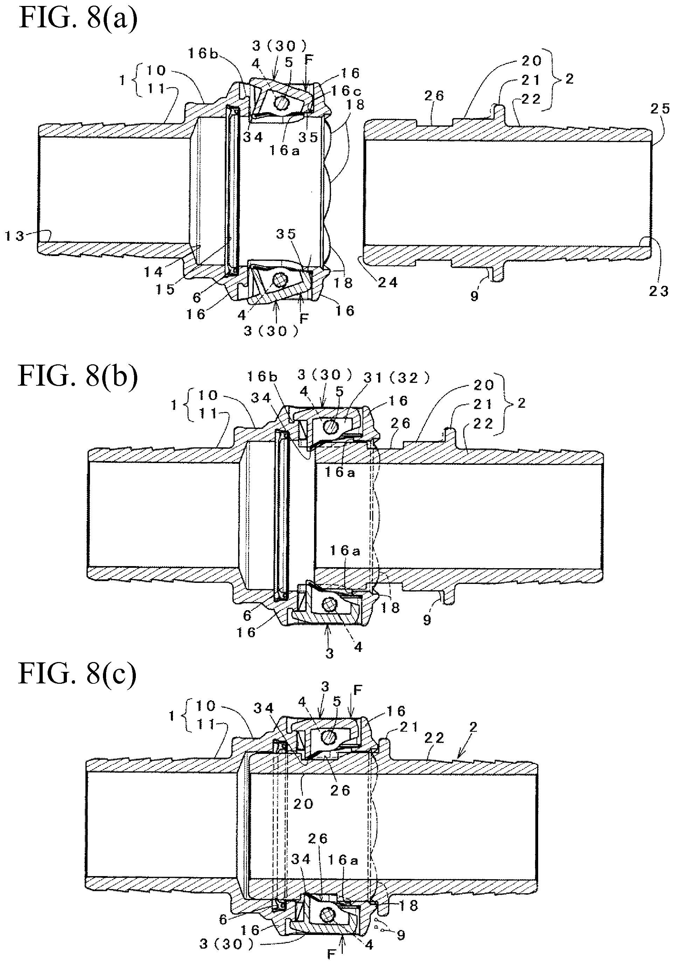

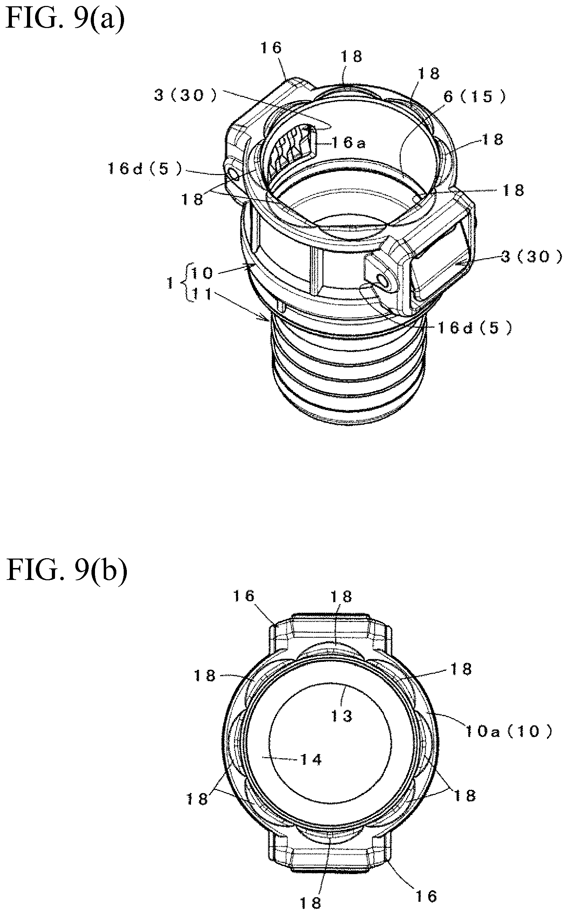

(Second Modified Example) In a second modified example of the present invention, for example, as shown in Figs. 8(a) to 8(c), and Figs. 9(a) and 9(b), there may be provided projections 18 on an end face of the receiving cylinder portion of the housing as well. As shown in Figs. 8(a) to 8(c) as an example, in order to engage the lock member with the engagement portion of the tubular member, i.e., to mount the tubular member on the housing, when the tubular member and the housing are operated to come close to each other, or one of the tubular member and the housing is operated to come close to the other of the tubular member and the housing, the aforementioned projections operate in such a way so as to scrape an attached object such as mud and the like attached to a face facing the receiving cylinder portion and the flange portion. As for a shape of the respective projections 18, in order to exert a scrape-out action for the attached object further effectively, preferably, as shown in Figs. 9(a) and 9(b), the shape is formed in a half cone shape, i.e., such that a projecting tip becomes gradually thinner from a base portion side; formed in an arc or a mountain shape projecting toward an outer diameter side from an inner diameter side on the base portion side; and formed over the whole periphery of an end face 10a of the receiving cylinder portion 10 at approximately equal intervals; however, since the housing and the tubular member sometimes relatively turn as shown in the embodiment, one projection 18 may be provided, and one projection may extend in a circumferential direction to form in an arc or a crescent shape as well. Since each projection 18 is formed such that the projection tip becomes gradually thinner from the base portion side, even if the attached object such as the mud and the like dries up and becomes hard, the aforementioned scrape-out action can be exerted further effectively.

Also, as shown in Figs. 9(a) and 9(b), in each projection 18, the base portion of each projection has the arc or the mountain shape projecting toward the outer diameter side from the inner diameter side, so that, for example, while moving from the inner diameter side to the outer diameter side, the attached object such as the mud and the like can be easily scraped so as to exert the scrape-out action further. Also, since the respective projections 18 are formed over the whole periphery of the end face 10a of the receiving cylinder portion, the aforementioned scrape-out action can be easily provided uniformly over the whole periphery, so that from this respect as well, the scrape-out action can be exerted further effectively. Additionally, in a case wherein the housing 1 and the tubular member 2 relatively turn, the attached object such as the mud and the like can easily come off further. Therefore, in the lock mechanism, a conventional operation of cleaning the attached object such as the mud and the like can be eliminated or reduced by half.

As described above, in the lock mechanism for the tubular member according to the present invention, the details can be modified or developed further with reference to the embodiment and the modified examples provided that they comprise the structures specified in the invention. As for an example thereof, applications may be applied in a case wherein, for example, the housing is attached to and detached from the fixed tubular member, or the tubular member is attached to and detached from the fixed housing provided that the lock mechanism for the tubular member is for attaching and detaching the tubular member relative to the housing.

Also, as for the housing, for example, the connection portion on a side opposite to the receiving cylinder portion can be omitted, and in place of the connection portion, a shielding wall can be provided so as to form as a lid or a cap. The support shaft 5 may be provided to project integrally with the lever. As for the urging device, other than the torsion spring 4, for example, a leaf spring or a coil spring can be used. As for the tube members 7 and 8, although the pipe or the hose is assumed, they may be metallic piping.

### Explanation of Symbols

1 ... a housing (10 is a receiving cylinder portion, and 11 is a connection portion.)
2 ... a tubular member (20 is a corresponding tube portion, and 22 is a connection portion.)
3 ... levers (a lock member)
3A ... levers (a lock member)
4 ... torsion springs (an urging device, 4a is one end portion, and 4b is the other end portions.)
5 ... support shafts
6 ... a seal member
7 ... a tube member
8 ... a tube member
9 ... a fastening band
16 ... frame portions
16b ... receiving faces
16c ... receiving faces
16e ... groove portions
16f ... control portions
18 ... projections
21 ... a flange portion
26 ... a circumferential groove (an engagement portion)
30 ... upper plate portions (30b is first abutment portions, and 30c is second abutment portions.)
31 ... block portions (34 is an engagement portion, and 36 is a shaft hole.)
39 ... prevention portions

## Claims

1. A lock mechanism including a housing, for a tubular member (2), which attaches and detaches the tubular member (2) relative to the housing (1) by engaging and disengaging the lock member provided in the housing (1) relative to an engagement portion (34) of the tubular member (2),
wherein the lock member is axially supported turnably on the housing (1), and includes an urging device provided between the lock member and the housing (1), and the urging device switches an urging direction in accordance with a turning angle of the lock member to urge the lock member in a locking direction of engaging with the tubular member (2) and a releasing direction of disengaging from the tubular member (2),
**characterized in that** the urging device is a torsion spring (4), engages one end side of the torsion spring (4) with a housing side, and engages another end side with a lock member side.

2. A lock mechanism according to claim 1, wherein the torsion spring (4) includes one end (4a) with an approximately U shape and engaging a groove portion (16e) provided in the housing (1), and another end (4b) engaging a hole portion formed in the lock member.

3. A lock mechanism according to claim 1 or 2, wherein the lock member includes a first abutment portion (30b) abutting against the housing (1) in a state wherein the lock member is engaged with the tubular member (2); and a second abutment portion (30c) abutting against the housing (1) in a state wherein the lock member is disengaged from the tubular member (2).

4. A lock mechanism according to any one of claims 1 to 3, wherein the lock member includes a prevention portion (39) projecting into the housing (1) to prevent an insertion of the tubular member (2) in a state wherein the lock member is urged in the releasing direction of releasing engagement.

5. A lock mechanism according to any one of claims 1 to 4, further comprising a receiving cylinder portion (10) provided in the housing (1) and receiving a corresponding tube portion (20) of the tubular member (2) inside; a flange portion (21) provided in the tubular member (2) to face an end face of the receiving cylinder portion (10) in a state wherein the corresponding tube portion (20) is inserted into the receiving cylinder portion (10), with enlarged diameter; and a projecting portion (3) provided on at least one of the end face of the receiving cylinder portion (10) and the flange portion (21), and coming close to another of the end face of the receiving cylinder portion (10) and the flange portion (21) in a state wherein the corresponding tube portion (20) of the tubular member (2) is inserted into the receiving cylinder portion (10).

## Patentansprüche

1. Verriegelungsmechanismus, umfassend ein Gehäuse, für ein rohrförmiges Element (2), der das rohrförmige Element (2) relativ zu dem Gehäuse (1) durch in Eingriff bringen und außer Eingriff bringen des in dem Gehäuse (1) bereitgestellten Verriegelungselements relativ zu einem Eingriffsabschnitt (34) des rohrförmigen Elements (2) befestigt und löst,
wobei das Verriegelungselement axial drehbar an dem Gehäuse (1) gelagert ist und eine zwischen dem Verriegelungselement und dem Gehäuse (1) bereitgestellte Drückvorrichtung einschließt, und die Drückvorrichtung eine Drückrichtung in Übereinstimmung mit einem Drehwinkel des Verriegelungselements schaltet, um das Verriegelungselement in eine Verriegelungsrichtung zum Eingreifen mit dem rohrförmigen Element (2) und in eine Freigaberichtung zum Lösen von dem rohrförmigen Element (2) zu drücken,
**dadurch gekennzeichnet, dass** die Drückvorrichtung eine Torsionsfeder (4) ist, die eine Endseite der Torsionsfeder (4) mit einer Gehäuseseite und eine andere Endseite mit einer Verriegelungselementseite in Eingriff bringt.

2. Verriegelungsmechanismus nach Anspruch 1,
wobei die Torsionsfeder (4) ein Ende (4a) mit annähernd einer U-Form, das mit einem in dem Gehäuse (1) bereitgestellten Nutabschnitt (16e) in Eingriff steht, umfasst, und ein anderes Ende (4b), das mit einem in dem Verriegelungselement ausgebildeten Lochabschnitt in Eingriff steht.

3. Verriegelungsmechanismus nach Anspruch 1 oder 2,
wobei das Verriegelungselement einen ersten Anschlagabschnitt (30b), der gegen das Gehäuse (1) in einem Zustand anstößt, in dem das Verriegelungselement mit dem rohrförmigen Element (2) in Eingriff steht; und einen zweiten Anschlagabschnitt (30c), der gegen das Gehäuse (1) in einem Zustand anstößt, in dem das Verriegelungselement von dem rohrförmigen Element (2) außer Eingriff steht, einschließt.

4. Verriegelungsmechanismus nach einem der Ansprüche 1 bis 3,
wobei das Verriegelungselement einen Verhinderungsabschnitt (39) einschließt, der in das Gehäuse (1) hineinragt, um ein Einführen des rohrförmigen Elements (2) in einem Zustand zu verhindern, in dem das Verriegelungselement in die Freigaberichtung zur Eingriffsfreigabe gedrückt ist.

5. Verriegelungsmechanismus nach einem der Ansprüche 1 bis 4,
ferner umfassend einen Aufnahmezylinderabschnitt (10), der in dem Gehäuse (1) bereitgestellt ist und der einen entsprechenden Rohrabschnitt (20) des rohrförmigen Elements (2) im Inneren aufnimmt; einen Flanschabschnitt (21), der in dem rohrförmigen Element (2) bereitgestellt ist, um in Richtung einer Endfläche des Aufnahmezylinderabschnitts (10) in einem Zustand zu zeigen, in dem der entsprechende Rohrabschnitt (20) in den Aufnahmezylinderabschnitt (10) eingeführt ist, mit vergrößertem Durchmesser; und einen vorspringenden Abschnitt (3), der an mindestens einer der Endfläche des Aufnahmezylinderabschnitts (10) und/oder des Flanschabschnitts (21) bereitgestellt ist, und der der jeweiligen anderen Endfläche des Aufnahmezylinderabschnitts (10) oder des Flanschabschnitts (21) des rohrförmigen Elements (2) in einem Zustand nahe kommt, in dem der entsprechende Rohrabschnitt (20) des rohrförmigen Elements (2) in den Aufnahmezylinderabschnitt (10) eingeführt ist.

## Revendications

1. Mécanisme de verrouillage comportant un boîtier, destiné à un élément tubulaire (2), qui accroche et décroche l'élément tubulaire (2) par rapport au boîtier (1) en accouplant et désaccouplant l'élément de verrouillage ménagé dans le boîtier (1) par rapport à une partie d'accouplement (34) de l'élément tubulaire (2),
en ce que l'élément de verrouillage est axialement supporté de manière rotative sur le boîtier (1), et comporte un dispositif de poussée ménagé entre l'élément de verrouillage et le boîtier (1), et le dispositif de poussée commute un sens de poussée selon un angle de rotation de l'élément de verrouillage afin de pousser l'élément de verrouillage dans un sens de verrouillage d'accouplement avec l'élément tubulaire (2) et un sens de déverrouillage de désaccouplement de l'élément tubulaire (2),
**caractérisé en ce que** le dispositif de poussée est un ressort de torsion (4), accouple un côté d'extrémité du ressort de torsion (4) avec un côté du boîtier, et accouple un autre côté d'extrémité avec un côté d'élément de verrouillage.

2. Mécanisme de verrouillage selon la revendication 1, en ce que le ressort de torsion (4) comporte une extrémité (4a) d'une forme approximativement en U et accouplant une partie de rainure (16e) ménagée dans le boîtier (1), et une autre extrémité (4b) accouplant une partie de trou formée dans l'élément de verrouillage.

3. Mécanisme de verrouillage selon la revendication 1 ou 2, en ce que l'élément de verrouillage comporte une première partie de butée (30b) venant en butée contre le boîtier (1) une fois que l'élément de verrouillage est accouplé avec l'élément tubulaire (2) ; et une seconde partie de butée (30c) venant en butée contre le boîtier (1) une fois que l'élément de verrouillage est désaccouplé de l'élément tubulaire (2).

4. Mécanisme de verrouillage selon l'une des revendications 1 à 3, en ce que l'élément de verrouillage comporte une partie d'empêchement (39) saillant dans le boîtier (1) afin d'empêcher une insertion de l'élément tubulaire (2) une fois que l'élément de verrouillage est poussé dans le sens de déverrouillage d'accouplement.

5. Mécanisme de verrouillage selon l'une des revendications 1 à 4, comprenant en outre une partie de cylindre de réception (10) ménagée dans le boîtier (1) et recevant une partie de tube correspondante (20) de l'élément tubulaire (2) à l'intérieur ; une partie de bride (21) ménagée dans l'élément tubulaire (2) pour faire face à une face d'extrémité de la partie de cylindre de réception (10) une fois que la partie de tube correspondante (20) est insérée dans la partie de cylindre de réception (10), avec un diamètre élargi ; et une partie saillante (3) ménagée au moins sur la face d'extrémité de la partie de cylindre de réception (10) et/ou de la partie de bride (21), et se rapprochant de l'autre face d'extrémité de la partie de cylindre de réception (10) et/ou de la partie de bride (21) une fois que la partie de tube correspondante (20) de l'élément tubulaire (2) est insérée dans la partie de cylindre de réception (10).
